# EUROPÄISCHE PATENTSCHRIFT

(11) **EP 0 661 849 B1**
(45) Veröffentlichungstag und Bekanntmachung des Hinweises auf die Patenterteilung: **05.04.2000**
(21) Anmeldenummer: 94119087.8
(22) Anmeldetag: 03.12.1994
(51) Int. Cl.: H04L 12/40, H04L 29/14

(54) **Datenbussystem**
Data bus system
Système de bus de données

(30) Priorität: 09.12.1993 DE 4342036
(43) Veröffentlichungstag der Anmeldung: 05.07.1995
(73) Patentinhaber: TEMIC TELEFUNKEN microelectronic GmbH, 74072 Heilbronn (DE); DaimlerChrysler AG, 70567 Stuttgart (DE)
(72) Erfinder: Häussler, Bernd, D-73760 Ostfildern (DE); Münk, German, D-88046 Friedrichshafen (DE); Meyer, Benno, D-88682 Salem (DE)
(74) Vertreter: Maute, Hans-Jürgen, Dipl.-Ing.

(56) Entgegenhaltungen:
- WO-A-90/08437
- ELECTRONIQUE RADIO PLANS, Nr.541, Dezember 1992, PARIS FR Seiten 63 - 69 D. PARET 'APPLICATIONS DU BUS CAN'
- MELECON '85, Bd.2, Oktober 1985, MADRID ES Seiten 447 - 450 C. J. GEORGOPOULOS 'DEVICES ANS SUBSYSTEMS CONNECTIONS IN MODERN ELECTRONIC OFFICES : SOME ANNOYING PROBLEMS'
- IBM TECHNICAL DISCLOSURE BULLETIN., Bd.32, Nr.4A, September 1989, NEW YORK US Seiten 393 - 395 'ACTIVE TERMINATORS FOR CMOS DRIVERS'

## Beschreibung

In einem Datenbussystem können die verschiedenen an den Datenbus (die Busleitungen) angeschlossenen Teilnehmer (Empfänger) miteinander kommunizieren bzw. untereinander Daten austauschen. Eine der möglichen Kommunikationsarten besteht darin, die Daten auf dem Datenbus seriell, mittels Differenzsignalen (d. h. über Busleitungen mit zueinander komplementären Logikpegeln) und bidirektional zu übertragen. Ein derartiges Datenbussystem ist beispielsweise das vor allem im Kfz-Bereich verwendete CAN-Bussystem mit zwei Busleitungen, das zur Anbindung mehrerer Teilnehmer im "low-speed"-Bereich (Datenübertragungsrate maximal 125 kBd) eingesetzt wird.
Jeder Teilnehmer des Datenbussystems muß über eine Endstufe an den Datenbus (die Busleitungen) angekoppelt werden. Diese Endstufe besteht aus den Teilschaltungen Sendeteil (Sendestufe) und Empfangsteil (Empfangsnetzwerk): die mit den Ausgängen bzw. Ausgangsleitungen des Teilnehmers verbundene Sendestufe dient zum Senden der Daten des Teilnehmers und besteht aus einer aktiven komplementären Transistorschaltung; das mit den Eingängen bzw. Eingangsleitungen des Teilnehmers verbundene Empfangsnetzwerk ermöglicht den Datenempfang des Teilnehmers und besteht aus einem passiven Widerstandsnetzwerk. Zusätzlich weist die Endstufe eines der Teilnehmer ein (Bus-) Abschlußnetzwerk auf: dieses niederohmige Abschlußnetzwerk stellt die Bedingungen für den Datenbusverkehr und die Spannungspegel auf den Busleitungen ein; es ist als passive Schaltung ausgebildet und somit immer aktiviert.
Nachteilig bei derartigen Datenbussystemen ist jedoch, daß
- bei Störungen oder Fehlern (beispielsweise Leitungsbrüchen, Kurzschlüssen etc.) zwar noch eine Datenübertragung zwischen den Teilnehmern möglich ist; da diese jedoch nur mit einem sehr geringen Störabstand erfolgt, kann sie demzufolge sehr leicht gestört werden
- beim Ausfall entweder des Abschlußnetzwerks oder desjenigen Teilnehmers dem das Abschlußnetzwerk zugeordnet ist, keine Datenübertragung mehr möglich ist
- im Ruhemodus ("sleep-mode") eine hohe Ruhestromaufnahme besteht.

Der Erfindung liegt die Aufgabe zugrunde, ein Datenbussystem anzugeben, bei dem die genannten Nachteile vermieden werden und das vorteilhafte Eigenschaften bzgl. der Datenübertragung auch im Fehlerfall aufweist.
Diese Aufgabe wird erfindungsgemäß durch die Merkmale im Kennzeichen des Patentanspruchs 1 gelöst.
Vorteilhafte Weiterbildungen des Datenbussystems ergeben sich aus den Unteransprüchen.

Jeder Endstufe eines Teilnehmers des Datenbussystems wird ein Abschlußnetzwerk zugeordnet: die Charakteristik der Abschlußnetzwerke wird so gewählt, daß mindestens (vorzugsweise) eine Endstufe ein niederohmiges, aktives, schaltbares sowie intern umschaltbares Abschlußnetzwerk aufweist; von den passiven Abschlußnetzwerken der übrigen Endstufen ist mindestens (vorzugsweise) eines niederohmig, alle anderen Abschlußnetzwerke sind hochohmig ausgebildet.
Die Endstufen (Empfangsteil, Sendeteil, Abschlußnetzwerk) der Teilnehmer werden so ausgebildet, daß eine Fehlererkennung im Datenbussystem möglich ist und daß selbst im Fehlerfall eine Datenübertragung mit hohem Störabstand erfolgen kann: das Widerstandsnetzwerk des Empfangsteils wird so modifiziert, daß bei einem Fehler auf einer Busleitung zunächst keine Daten mehr übertragen werden können; dies wird erkannt und nach Ermittlung der fehlerbehafteten Busleitung die Datenübertragung auf der anderen (intakten) Busleitung durchgeführt.
Das vorgestellte Datenbussystem weist durch die Verteilung des Abschlußnetzwerks auf alle Endstufen, durch die beschriebene Ausgestaltung der Abschlußnetzwerke sowie durch die oben genannte Ausbildung der Sendeteile und Empfangsteile vorteilhafte Eigenschaften auf:
- der "aktive Teil" des Abschlußnetzwerks wird im Ruhemodus (sleep-mode) abgeschaltet, wodurch eine minimale Ruhestromaufnahme erreicht wird
- der "niederohmige Teil" des Abschlußnetzwerks wird auf mindestens zwei Teilnehmer verteilt (Redundanz), so daß auch beim Ausfall eines der niederohmigen Abschlußnetzwerke bzw. eines der zugehörigen Teilnehmer eine Datenübertragung möglich ist; aufgrund der Dimensionierung der Schaltungskomponenten der Endstufe erfolgt in diesem Fall eine Pegelverschiebung, wodurch ein ausreichender Störabstand bei der Datenübertragung gewährleistet ist
- es kann eine Vielzahl von Fehlern auf dem Datenbus (Kurzschluß einer Busleitung gegen Bezugspotential oder Versorgungsspannung, Kurzschluß der Busleitungen gegeneinander, Leitungsbruch einer Leitung) erkannt werden
- im Fehlerfall kann durch eine interne Umschaltung des aktiven Abschlußnetzwerks die komplementäre, nicht von Fehlern betroffene Busleitung für die Datenübertragung aktiviert werden (Eindrahtmodus); die Empfangspegel werden in diesem Falle durch das Umschalten des aktiven Abschlußnetzwerks so verändert, daß ein großer (ausreichender) Störabstand bei der Datenübertragung vorhanden ist
- eine Datenübertragung im Zweidrahtmodus ist wahlweise entweder mit konventionellen Spannungspegeln (3,25 V/1,75 V logische "1", 1 V/4 V logische "0") im Normalbetrieb oder aber mit veränderten Spannungspegeln (5 V/0 V logische "1"; 1,2 V/3,8 V logische "0") beim Wecken nach dem Ruhemodus sowie im Redundanzbetrieb (beim Ausfall eines der niederohmigen Abschlußnetzwerke) möglich
- falls das Datenbussystem mehr als zwei niederohmige Abschlußnetzwerke aufweist - von denen jedoch vorzugsweise nur jeweils zwei gleichzeitig aktiviert sind -, kann beim Ausfall eines der momentan aktivierten niederohmigen Abschlußnetzwerke (bzw. des entsprechenden Teilnehmers) dieses durch Aktivierung eines der nicht-aktivierten niederohmigen Anschlußnetzwerke ersetzt und dessen Funktion von dem neu aktivierten Abschlußnetzwerk übernommen werden.

Die Erfindung soll weiterhin anhand eines in der Zeichnung dargestellten Ausführungsbeispieles - eines Datenbussystems mit einem zwei Busleitungen aufweisenden Datenbus - erläutert werden.

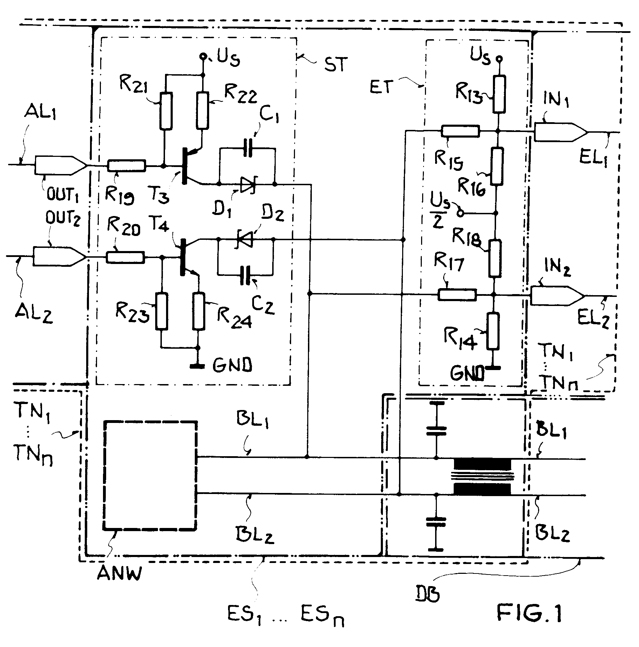

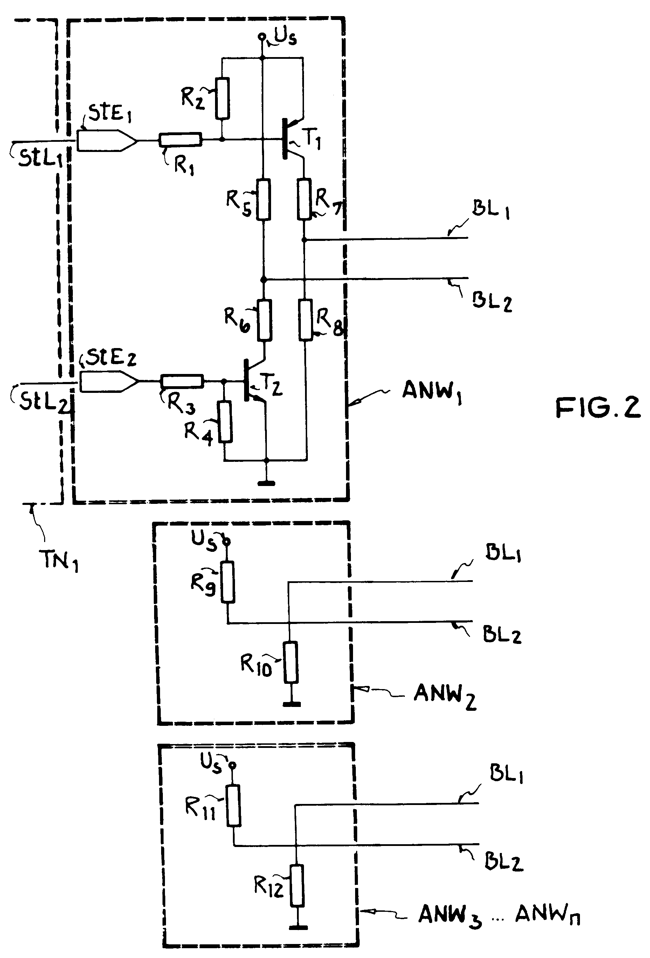

Die Figur 1 zeigt dabei die Endstufe eines Teilnehmers des Datenbussystems und die Figur 2 ein Detailschaltbild der Abschlußnetzwerke der verschiedenen Teilnehmer des Datenbussystems.

Die Endstufen ES₁ ... ESₙ dienen zur Ankopplung der Teilnehmer TN₁ ... TNₙ an den Datenbus DB (Busleitungen BL₁, BL₂) des Datenbussystems. Jede Endstufe ES₁ ... ESₙ weist gemäß der Figur 1 einen mit dem zugehörigen Teilnehmer TN₁ ... TNₙ über Eingangsleitungen EL₁, EL₂ verbundenen Empfangsteil ET, einen mit dem zugehörigen Teilnehmer TN₁ ... TNₙ über Ausgangsleitungen AL₁, AL₂ verbundenen Sendeteil ST sowie ein Abschlußnetzwerk ANW₁ ... ANWₙ auf.
a) Sendeteil ST:
   Der Teilnehmer TN₁ ... TNₙ steuert über die beiden mit den Ausgangsleitungen AL₁, AL₂ verbundenen Ausgänge OUT₁, OUT₂ den Sendeteil ST an; dieser stellt bei durchgeschalteten Treibertransistoren T₃, T₄ die einer logischen "0" zugeordneten (dominanten) Spannungspegel auf dem Datenbus DB ein. Die Emitterwiderstände R₂₂ und R₂₄ bilden eine Stromgegenkopplung, durch die im Falle einer nach Bezugspotential (Versorgungsspannung Uₛ, Masse GND) kurzgeschlossenen Busleitung BL₁, BL₂ der Strom durch die Treibertransistoren T₁, T₂ auf einen bestimmten Maximalstrom begrenzt wird (daher sind als Kurzschlußschutz keine Transistoren, Widerstände mit höherer Leistung oder sonstige Bauelemente erforderlich).
b) Empfangsteil ET:
   Durch den Empfangsteil ET werden die Spannungspegel auf dem Datenbus DB mit einem bestimmten Gleichstromübertragungsfaktor (beispielsweise 4,65) linear in solche Spannungspegel umgesetzt, die im Common-Mode-Bereich des über die Eingangsleitungen EL₁, EL₂ an die beiden Eingänge IN₁, IN₂ angeschlossenen Empfangskomparators des zugehörigen Teilnehmers TN₁ ... TNₙ liegen. Das Empfangsnetzwerk besteht aus den Widerständen R₁₅ bis R₁₈ sowie aus dem gegen Versorgungsspannung U_{S} geschalteten Widerstand R₁₃ und dem gegen Bezugspotential (Masse GND) geschalteten Widerstand R₁₄. Die (komplementäre) Eingangsspannung an den Eingängen IN₁, IN₂ beträgt entweder 0 V oder 5 V; die daraus resultierende Busspannung (Spannung auf den Busleitungen BL₁, BL₂) wird über die Abschlußnetzwerke und den Sendeteil ST (Treibertransistoren T₃, T₄, Dioden D₁, D₂, Emitterwiderstände R₂₂, R₂₄) eingestellt. Am Empfangskomparator des Teilnehmers TN₁ ... TNₙ steht als Spannung die durch den Übertragungsfaktor (beispielsweise 4,65) heruntergeteilte Busspannung an. Demzufolge weicht im Zweidrahtbetrieb bei einem Fehler auf dem Datenbus DB (Kurzschluß einer Busleitung BL₁, BL₂ gegen Masse GND oder Versorgungsspannung Uₛ, Bruch einer Busleitung BL₁, BL₂ oder Kurzschluß der Busleitungen BL₁, BL₂ gegeneinander) der Spannungspegel an der defekten Busleitung BL₁ bzw. BL₂ vom Spannungspegel an der intakten Busleitung BL₂ bzw. BL₁ signifikant ab. Damit ist ein Datenempfang im Fehlerfall zunächst ausgeschlossen, was als Kriterium zur Fehlererkennung dient. Die Datenübertragung wird dann im Eindrahtbetrieb auf der intakten Busleitung BL₁ oder BL₂ vorgenommen.
c) Abschlußnetzwerk ANW₁ ... ANWₙ:
   Mittels des Abschlußnetzwerks des Datenbussystems werden die einer logischen "1" zugeordneten (rezessiven) Spannungspegel auf dem Datenbus generiert. Es wird gemäß Figur 2 so konfiguriert, daß jedem Teilnehmer TN₁ ... TNₙ ein Abschlußnetzwerk ANW₁ ... ANWₙ zugeordnet wird, d. h. jede Endstufe ES₁ ... ENₙ weist ein Abschlußnetzwerk ANW₁ ... ANWₙ auf; eine Endstufe ES₁ erhält ein niederohmiges (Widerstände R₁, R₃: bsp. 10 kΩ; R₂, R₄: bsp. 8,2 kΩ; R₅, R₈: bsp. 2,4 kΩ; R₆, R₇: bsp. 2,2 kΩ), aktives, schaltbares (Transistoren T₁, T₂) und intern umschaltbares Abschlußnetzwerk ANW₁, die weiteren Endstufen ES₂ ... ESₙ weisen passive Abschlußnetzwerke auf, von denen das Abschlußnetzwerk ANW₂ der Endstufe ES₂ niederohmig (Widerstände R₉, R₁₀: bsp. 2,4 kΩ) ist und die Abschlußnetzwerke ANW₃ ... ANWₙ der restlichen Endstufen ES₃ ... ESₙ - über diese wird das Potential für den Empfangsteil des jeweiligen Teilnehmers definiert - hochohmig (Widerstände R₁₁, R₁₂: bsp. 100 kΩ) ausgebildet sind.

In den verschiedenen Buszuständen haben die Endstufen - insbesondere die Abschlußnetzwerke - folgende Funktion:
a) Ruhemodus (sleep-mode):
   Das "aktive" Abschlußnetzwerk ANW₁ wird vom Teilnehmer TN₁ über die beiden Steuereingänge StE₁, StE₂ so angesteuert, daß die beiden Transistoren T₁ und T₂ sperren, d. h. die Spannungspegel auf dem Datenbus sind 5 V (Low-Pegel) und 0 V (High-Pegel). Damit wird erreicht, daß die Stromaufnahme im Ruhezustand minimal ist.
b) Wecken:
   Wird einer der Teilnehmer TN extern aktiviert (d. h. der Teilnehmer wird nicht über den Datenbus geweckt), gibt dieser ein Wecksignal über den Datenbus DB an alle anderen Teilnehmer weiter. Obwohl das aktive Abschlußnetzwerk ANW₁ noch deaktiviert ist, kann bereits eine Datenübertragung erfolgen.
c) Normalmodus:
   Nachdem der Teilnehmer TN₁ mit dem Abschlußnetzwerk ANW₁ geweckt ist (parallel hierzu werden die anderen Teilnehmer TN₂ ... TNₙ des Datenbussystems mitgeweckt), wird das aktive Abschlußnetzwerk ANW₁ über die Steuerleitungen StL₁, StL₂ des Teilnehmers 1 eingeschaltet. Mittels der beiden Spannungsteiler (Widerstände R₅, R₆ und R₇, R₈) des aktiven Abschlußnetzwerks ANW₁ und der beiden Widerstände R₉, R₁₀ des niederohmigen passiven Abschlußnetzwerks ANW₂ werden die rezessiven Spannungspegel auf dem Datenbus erzeugt (beispielsweise High-Pegel: 3,25 V und Low-Pegel: 1,75 V). In Verbindung mit den Treibertransistoren T₃, T₄ der Sendestufen ST werden auch die dominanten Spannungspegel auf dem Datenbus eingestellt (beispielsweise Low-Pegel: 1 V, High-Pegel: 4 V). Diese Standard-Spannungspegel liegen bis zum nächsten Übergang in dem Ruhemodus oder bis zum Auftreten eines Fehlers auf dem Datenbus an.
d) Fehlerfall:
   - Busfehler: mittels eines Suchalgorithmus wird der Fehler erkannt, der Fehlertyp charakterisiert und die betroffene Busleitung lokalisiert; die Datenübertragung wird auf der intakten Busleitung vorgenommen, d. h. es wird in den Eindrahtbetrieb übergegangen.
      Der mit der defekten Busleitung verbundene Ausgang OUT₁ bzw. OUT₂ der Teilnehmer TN₁ ... TNₙ wird hochohmig und der zugehörige Eingang IN₁ bzw. IN₂ der Teilnehmer TN₁ ... TNₙ auf die interne Referenzspannung (beispielsweise ½ · U_{S} = 2,5 V) ) geschaltet. Außerdem wird im aktiven Abschlußnetzwerk ANW₁ der die intakte Busleitung BL₁ bzw. BL₂ steuernde Transistor T₁ bzw. T₂ ausgeschaltet (dies ist erforderlich, weil bei gegeneinander kurzgeschlossenen Busleitungen BL₁, BL₂ der Störabstand an den Eingängen des Empfangskomparators des Teilnehmers zu gering wäre).
   - Ausfall des Teilnehmers TN₁ oder TN₂: da der niederohmige Teil des Abschlußnetzwerks aus Redundanzgründen auf zwei Teilnehmer TN₁, TN₂ verteilt wurde, ist auch bei Ausfall von Teilnehmer TN₁ oder TN₂ aufgrund des noch vorhandenen weiteren niederohmigen Abschlußnetzwerks ANW₂ oder ANW₁ eine Datenübertragung möglich.
   - Leitungsbrüche: die Erkennung von Leitungsbrüchen erfolgt durch Erkennung von Fehlern in der Datenkommunikation (ausgebliebene Prüfbotschaften).
   - Bei der Datenübertragung im Fehlerfall liegen grundsätzlich keine Standard-Spannungspegel auf dem Datenbus vor.

Um die verschiedenen Betriebsmodi bzw. Zustände des Datenbusses einzustellen, müssen die mit den Treibertransistoren T₃, T₄ der Sendestufe ST verbundenen Ausgänge OUT₁, OUT₂ der Teilnehmer TN₁ ... TNₙ und die mit den Transistoren T₁, T₂ des aktiven Abschlußnetzwerks ANW₁ verbundenen Steuereingänge StE₁, StE₂ in ganz bestimmter Weise aktiviert bzw. deaktiviert werden.

## Patentansprüche

1. Datenbussystem bestehend aus:
a) einem seriellen, mit komplementären Logiksignalen betriebenen Datenbus (DB),
b) mehreren Teilnehmern (TN₁ ... TNₙ), die über die Busleitungen (BL₁, BL₂) des Datenbusses (DB) miteinander kommunizieren,
c) mehreren Endstufen (ES₁ ... ESₙ) mit einem Sendeteil (ST) und Empfangsteil (ET), wobei jedem Teilnehmer (TN₁ ... TNₙ) zur Ankopplung an den Datenbus (DB) eine Endstufe (ES₁ ... ESₙ) zugeordnet ist,
gekennzeichnet dadurch:
d) die Endstufe (ES₁ ... ESₙ) jedes Teilnehmers (TN₁ ... TNₙ) weist ein Abschlußnetzwerk (ANW₁ ... ANWₙ) auf,
e) das Abschlußnetzwerk (ANW₁) mindestens einer Endstufe (ES₁) ist niederohmig, aktiv, schaltbar und intern umschaltbar ausgebildet,
f) das Abschlußnetzwerk (ANW₂) mindestens einer weiteren Endstufe (ES₂) ist passiv und niederohmig ausgebildet,
g) die Abschlußnetzwerke (ANW₃ ... ANWₙ) aller anderen Endstufen (ES₃ ... ESₙ) sind passiv und hochohmig ausgebildet.

2. Datenbussystem nach Anspruch 1, dadurch gekennzeichnet, daß das aktive Abschlußnetzwerk (ANW₁) zwei Steuereingänge (StE₁, StE₂) aufweist, die über zwei Steuerleitungen (StL₁, StL₂) mit dem zugehörigen Teilnehmer (TN₁) verbunden sind, und daß die Busleitungen (BL₁, BL₂) durch Steuersignale auf den Steuerleitungen (StL₁, StL₂) aktivierbar oder deaktivierbar sind.

3. Datenbussystem nach Anspruch 1 oder 2, dadurch gekennzeichnet, daß das aktive Abschlußnetzwerk (ANW₁) zwei Schaltelemente (T₁, T₂) aufweist, deren Ausgang jeweils mit einer Busleitung (BL₁, BL₂) verbunden ist.

4. Datenbussystem nach Anspruch 3, dadurch gekennzeichnet, daß die beiden Schaltelemente (T₁, T₂) als komplementäre Bipolartransistoren ausgebildet sind.

5. Datenbussystem nach einem der Ansprüche 1 bis 4, dadurch gekennzeichnet, daß die Spannungspegel auf dem Datenbus (DB) durch Wahl der Widerstände (R₁ ... R₁₀) der niederohmigen Abschlußnetzwerke (ANW₁, ANW₂) einstellbar sind.

6. Datenbussystem nach einem der Ansprüche 1 bis 5, dadurch gekennzeichnet, daß die Endstufen (ES₁ ... ESₙ) der Teilnehmer (TN₁ ... TNₙ) so ausgebildet sind, daß Fehler auf den Busleitungen (BL₁ , BL₂) des Datenbusses (DB) erkennbar sind.

7. Datenbussystem nach Anspruch 6, dadurch gekennzeichnet, daß ein Eingang (IN₁) des Empfangsteils (ET) der Endstufe (ES₁ ... ESₙ) über einen Widerstand (R₁₃) mit der Versorgungsspannung (Uₛ) und der andere Eingang (IN₂) über einen Widerstand (R₁₄) mit Bezugspotential (GND) verbunden ist.

8. Datenbussystem nach Anspruch 6 oder 7, dadurch gekennzeichnet, daß die beiden Eingänge (IN₁, IN₂) des Empfangsteils (ET) der Endstufe (ES₁ ... ESₙ) über zwei Widerstände (R₁₆, R₁₈) miteinander verbunden sind, und daß der gemeinsame Anschluß dieser beiden Widerstände (R₁₆, R₁₈) an eine interne Referenzspannung angeschlossen ist.

9. Datenbussystem nach Anspruch 8, dadurch gekennzeichnet, daß die interne Referenzspannung (½ · U_{S}) die Hälfte der Versorgungsspannung (U_{S}) beträgt.

## Claims

1. A data bus system consisting of:
a) a serial data bus (DB) functioning with complementary logic signals,
b) a plurality of subscriber-units (TN₁ ... TNₙ), that communicate with one another over the bus lines (BL₁, BL₂) of the data bus (DB),
c) a plurality of terminating stages (ES₁ ... ESₙ) having a transmitting section (ST) and a receiving section (ET), whereby one terminating stage (ES₁ ... ESₙ) is associated with each subscriber-unit (TN₁ ... TNₙ) for coupling it to the data bus (DB),
characterised in that
d) the terminating stage (ES₁ ... ESₙ) for each subscriber-unit (TN₁ ... TNₙ) comprises a terminating network (ANW₁ ... ANWₙ),
e) the terminating network (ANW₁) of at least one terminating stage (ES₁) is of low impedance, active, switchable, and can be switched over internally,
f) the terminating network (ANW₂) of at least one further terminating stage (ES₂) is passive and of low impedance,
g) the terminating networks (ANW₃ ... ANWₙ) of each of the other terminating stages (ES₃ ... ESₙ) are passive and of high impedance.

2. A data bus system in accordance with Claim 1, characterised in that the active terminating network (ANW₁) comprises two control inputs (StE₁, StE₂) which are connected to the appertaining subscriber-unit (TN₁) via two control lines (StL₁, StL₂), and in that the bus lines (BL₁, BL₂) are activatable or deactivatable by means of control signals on the control lines (StL₁, StL₂).

3. A data bus system in accordance with Claim 1 or 2, characterised in that the active terminating network (ANW₁) comprises two switching elements (T₁, T₂), the output of each of which is connected to a respective bus line (BL₁, BL₂).

4. A data bus system in accordance with Claim 3, characterised in that the two switching elements (T₁, T₂) are in the form of complementary bipolar transistors.

5. A data bus system in accordance with any of the Claims 1 to 4, characterised in that the voltage levels on the data bus (DB) are set by selecting resistors (R₁ ... R₁₀) in the low impedance terminating networks (ANW₁, ANW₂)

6. A data bus system in accordance with any of the Claims 1 to 5, characterised in that the terminating stages (ES₁ ... ESₙ) of the subscriber-units (TN₁ ... TNₙ) are constructed in such a way that faults on the bus lines (BL₁, BL₂) of the data bus (DB) are identifiable.

7. A data bus system in accordance with Claim 6, characterised in that one input (IN₁) of the receiving section (ET) in the terminating stages (ES₁ ... ESₙ) is connected to the supply voltage (U_{S}) via a resistor (R₁₃) and the other input (IN₂) thereof is connected to a reference potential (GND) via a resistor (R₁₄).

8. A data bus system in accordance with Claim 6 or 7, characterised in that the two inputs (IN₁, IN₂) of the receiving section (ET) in the terminating stages (ES₁ ... ESₙ) are connected together via two resistors (R₁₆, R₁₈), and in that the common connection of these two resistors (R₁₆, R₁₈) is connected to an internal reference voltage.

9. A data bus system in accordance with Claim 8, characterised in that the internal reference voltage (1/2 x U_{S}) is equal to half the supply voltage (U_{S}).

## Revendications

1. Système de bus de transmission de données constitué par :
a) un bus série de transmission de données (DB), qui fonctionne avec des signaux logiques complémentaires,
b) plusieurs abonnés (TN₁...TNₙ), qui communiquent entre eux par l'intermédiaire des lignes (BL₁,BL₂) du bus de transmission de données (DB),
c) plusieurs étages finals (ES₁...ESₙ) comportant une partie d'émission (ST) et une partie de réception (ET), un étage final (ES₁...ESₙ) étant associé à chaque abonné (TN₁...TNₙ) pour le couplage au bus de transmission de données (DB),
caractérisé en ce que :
d) l'étage final (ES₁...ESₙ) de chaque abonné (TN₁...TNₙ) comporte un réseau de terminaison (ANW₁...ANWₙ),
e) le réseau de terminaison (ANW₁) d'au moins un étage final (ES₁) est agencé de manière à avoir une faible valeur ohmique et à être actif, commandable et commutable de façon interne,
f) le réseau de terminaison (ANW₂) d'au moins un autre étage final (ES₂) est agencé de manière à être passif et à présenter une faible valeur ohmique,
g) les réseaux de terminaison (ANW₁...ANWₙ) de tous les autres étages finals (ES₃...ETₙ) sont agencés de manière à être passifs et à présenter une forte valeur ohmique.

2. Système de bus de transmission de données selon la revendication 1, caractérisé en ce que le réseau de terminaison actif (ANW₁) comporte deux entrées de commande (StE₁,StE₂), qui sont reliées par l'intermédiaire de deux lignes de commande (StL₁,StL₂) à l'abonné associé (TN₁), et que les lignes de bus (BL₁,BL₂) peuvent être activées ou désactivées par des signaux de commande circulant dans les lignes de commande (StL₁,StL₂).

3. Système de bus de transmission de données selon la revendication 1 ou 2, caractérisé en ce que le réseau de terminaison actif (ANW₁) comporte deux éléments de commutation (T₁,T₂), dont la sortie est reliée respectivement à une ligne de bus (BL₁,BL₂).

4. Système de bus de transmission de données selon la revendication 3, caractérisé en ce que les deux éléments de commutation (T₁T₂) sont agencés sous la forme de transistors bipolaires complémentaires.

5. Système de bus de transmission de données selon l'une des revendications 1 à 4, caractérisé en ce que les niveaux de tension dans le bus de transmission de données (DB) sont réglables grâce au choix des résistances (R₁...R₁₀) des réseaux de terminaison de faible valeur ohmique (ANW₁,ANW₂).

6. Système de bus de transmission de données selon l'une des revendications 1 à 5, caractérisé en ce que les étages finals (ES₁...ESₙ) des abonnées (TN₁...TNₙ) sont agencés de telle sorte que des défauts dans les lignes (BL₁,BL₂) du bus de transmission de données (DB) sont identifiables.

7. Système de bus de transmission de données selon la revendication 6, caractérisé en ce qu'une entrée (IN₁) de la partie de réception (ET) des étages de finals (ES₁...ESₙ) est reliée par l'intermédiaire d'une résistance (R₁₃) à la tension d'alimentation (Uₛ) et que l'autre entrée (IN₂) est reliée par l'intermédiaire d'une résistance (R₁₄) au potentiel de référence (GND).

8. Système de bus de transmission de données selon la revendication 6 ou 7, caractérisé en ce que les deux entrées (IN₁,IN₂) de la partie de réception (ET) des étages finals (ES₁...ESₙ) sont reliées entre elles par l'intermédiaire de deux résistances (R₁₆,R₁₈) et que la borne commune de ces deux résistances (R₁₆,R₁₈) est placée à une tension de référence interne.

9. Système de bus de transmission de données selon la revendication 8, caractérisé en ce que la tension de référence interne (1/2.Uₛ) est égale à la moitié de la tension d'alimentation (Uₛ).
